# EUROPEAN PATENT SPECIFICATION

(11) **EP 4 036 704 B1**
(45) Date of publication and mention of the grant of the patent: **21.01.2026**
(21) Application number: 21153761.8
(22) Date of filing: 27.01.2021
(51) Int. Cl.: G06F 7/523

(54) **MULTIPLIER**
MULTIPLIKATOR
MULTIPLICATEUR

(43) Date of publication of application: 03.08.2022
(73) Proprietor: Nokia Technologies Oy, 02610 Espoo (FI)
(72) Inventor: JIVANESCU, Mihaela, 3360 Bierbeek (BE); GOMONY, Manil Dev, 2000 Antwerp (BE)
(74) Representative: Whiting, Gary

(56) References cited:
- EP-A1- 3 480 710
- US-A- 5 946 222
- US-B1- 7 739 324

## Description

### Field

The present specification relates to multipliers and multiplier circuitry.

### Background

Multipliers, such as binary multipliers, are basic building blocks that are widely used in General Purpose Processors (GPP), Digital Signal Processors (DSP), hardware accelerators and similar circuitry. For example, binary multipliers are used in the baseband processing in wireless and wireline communication systems. Although many multiplier arrangements are known, there remains a desire for further developments in this field.

US 5,946,222 describes a method and apparatus for performing an add-masked byte operation on a word of digital data. A register receives the word, a register receives a mask-byte, and a multiplication module receives inputs from the registers. A multiplier multiplies each byte in the word by a corresponding bit in the mask byte to obtain a series of partial products. A multiplexer shifts the partial products until the partial products are disposed in the same register location as the location of the partial product achieved with the least significant byte in the word.

### Summary

In a first aspect, this specification describes an apparatus comprising means for performing: generating a first set of partial products that define aᵢ*(bᵢ₋₁:b₀) + bᵢ*(aᵢ₋₁:a₀) for all values of i, dependent on the values of selector bits aᵢ and bᵢ; generating a second set of partial products that define aᵢbᵢ for all values of i; and shifting and summing the first and second sets of partial products.

In some example embodiments, the means for performing generating the first set of partial products provides the partial product (aᵢ₋₁:a₀) + (bᵢ₋₁:b₀) for all cases where aᵢ=1 and bᵢ=1.

The apparatus may further comprise means for performing: generating a sum vector and a carry vector to enable generation of the partial product (aᵢ₋₁:a₀) + (bᵢ₋₁:b₀) for any value of i.

The means for performing generating the first set of partial products may provide the partial product (aᵢ₋₁:a₀) for all cases where aᵢ=0 and bᵢ=1. Alternatively, or in addition, the means for performing generating the first set of partial products may provide the partial product (bᵢ₋₁:b₀) for all cases where aᵢ=1 and bᵢ=0. Alternatively, or in addition, the means for performing generating the first set of partial products may provide the partial product o for all cases where aᵢ=0 and bᵢ=0.

In some example embodiments, the shifting of said first and second sets of partial products aligns said partial products based on the respective bit significance of said partial products.

The summing the first and second sets of partial products may comprise a combination (such as a Wallace tree or similar combination) of the shifted first and second sets of partial products.

The said means may comprise: at least one processor; and at least one memory including computer program code, the at least one memory and the computer program code configured to, with the at least one processor, cause the performance of the apparatus.

In a second aspect, this specification describes a method comprising: generating a first set of partial products that define aᵢ*(bᵢ₋₁:b₀) + bᵢ*(aᵢ₋₁:a₀) for all values of i, dependent on the values of selector bits aᵢ and bᵢ; generating a second set of partial products that define aᵢbᵢ for all values of i; and shifting and summing the first and second sets of partial products.

In some example embodiments, generating the first set of partial products comprises one or more of: providing the partial product (aᵢ₋₁:a₀) + (bᵢ₋₁:b₀) for all cases where aᵢ=1 and bᵢ=1; providing the partial product (aᵢ₋₁:a₀) for all cases where aᵢ=0 and bᵢ=1; providing the partial product (bᵢ₋₁:b₀) for all cases where aᵢ=1 and bᵢ=0; and providing the partial product o for all cases where aᵢ=0 and bᵢ=0.

The method may further comprise generating a sum vector and a carry vector to enable generation of the partial product (aᵢ₋₁:a₀) + (bᵢ₋₁:b₀) for any value of i.

In some example embodiments, the shifting of said first and second sets of partial products aligns said partial products based on the respective bit significance of said partial products.

The summing the first and second sets of partial products may comprise a combination (such as a Wallace tree or similar combination) of the shifted first and second sets of partial products.

In a third aspect, this specification describes computer-readable instructions which, when executed by computing apparatus, cause the computing apparatus to perform (at least) any method as described with reference to the second aspect.

In a fourth aspect, this specification describes a computer-readable medium (such as a non-transitory computer-readable medium) comprising program instructions stored thereon for performing (at least) any method as described with reference to the second aspect.

In a fifth aspect, this specification describes an apparatus comprising: at least one processor; and at least one memory including computer program code which, when executed by the at least one processor, causes the apparatus to perform (at least) any method as described with reference to the second aspect.

In a sixth aspect, this specification describes a computer program comprising instructions for causing an apparatus to perform at least the following: generating a first set of partial products that define aᵢ*(bᵢ₋₁:b₀) + bᵢ*(aᵢ₋₁:a₀) for all values of i, dependent on the values of selector bits aᵢ and bᵢ; generating a second set of partial products that define aᵢbᵢ for all values of i; and shifting and summing the first and second sets of partial products. The computer program may further comprise instructions for causing an apparatus to perform at least one of the following: providing the partial product (aᵢ₋₁:a₀) + (bᵢ₋₁:b₀) for all cases where aᵢ=1 and bᵢ=1; providing the partial product (aᵢ₋₁:a₀) for all cases where aᵢ=0 and bᵢ=1; providing the partial product (bᵢ₋₁:b₀) for all cases where aᵢ=1 and bᵢ=0; and providing the partial product o for all cases where aᵢ=0 and bᵢ=0. The computer program may further comprise instructions for causing an apparatus to perform at least the following: generating a sum vector and a carry vector to enable generation of the partial product (aᵢ₋₁:a₀) + (bᵢ₋₁:b₀) for any value of i.

In a seventh aspect, this specification describes: a first partial products generator (or some other means) for generating a first set of partial products that define aᵢ*(bᵢ₋₁:b₀) + bᵢ*(aᵢ₋₁:a₀) for all values of i, dependent on the values of selector bits aᵢ and bᵢ; a second partial products or tip bit generator (or some other means) for generating a second set of partial products that define aᵢbᵢ for all values of i; and a partial products alignment module (or some other means) for shifting and summing the first and second sets of partial products.

### Brief description of the drawings

Example embodiments will now be described, by way of example only, with reference to the following schematic drawings, in which:
FIG. 1 is a block diagram of a binary multiplier in accordance with an example embodiment;
FIG. 2 is a block diagram of a half-adder circuit that may be used in some example embodiments;
FIG. 3 is a block diagram of a full-adder circuit that may be used in some example embodiments;
FIG. 4 is a flow chart showing an algorithm in accordance with an example embodiment;
FIG. 5 is a block diagram showing a multiplication of two four-bit inputs;
FIGS. 6 to 8 are block diagrams showing partial product groupings that form part of a multiplication algorithm in accordance with an example embodiment;
FIG. 9 is a block diagram showing steps of a multiplication algorithm in accordance with an example embodiment;
FIG. 10 is a flow chart showing an algorithm in accordance with an example embodiment;
FIGS. 11 to 13 are block diagrams showing steps of a multiplication algorithm in accordance with example embodiments;
FIG. 14 is a block diagram of a system in accordance with an example embodiment;
FIG. 15 is a block diagram showing a multiplication of two inputs;
FIG. 16 is a block diagram showing partial product groupings that form part of a multiplication algorithm in accordance with an example embodiment;
FIGS. 17 and 18 are block diagrams showing steps of a multiplication algorithm in accordance with example embodiments;
FIG. 19 is a block diagram of components of a system in accordance with an example embodiment; and
FIGS. 20A and 20B show tangible media, respectively a removable non-volatile memory unit and a compact disc (CD) storing computer-readable code which when run by a computer perform operations according to example embodiment.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

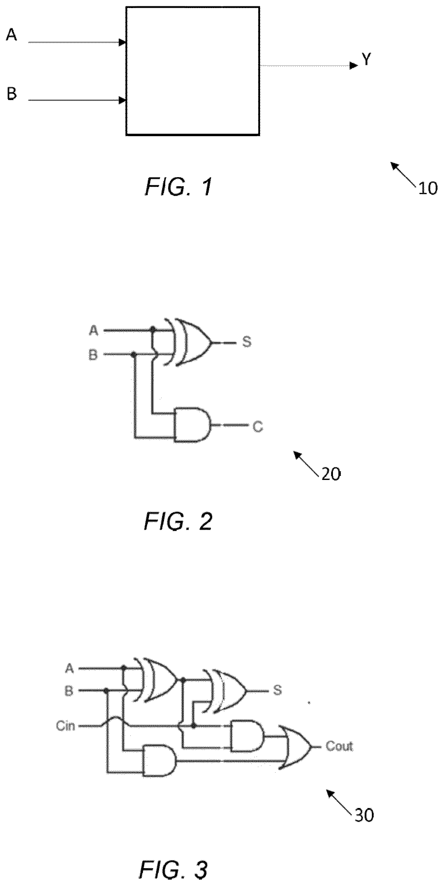

FIG. 1 is a block diagram of a binary multiplier 10 in accordance with an example embodiment. The multiplier 10 has a first input A and a second input B and provides an output Y that is the result of multiplying A and B (i.e. Y=A*B).

Binary multipliers, such as the binary multiplier 10, are basic building blocks widely used in General Purpose Processors (GPP), Digital Signal Processors (DSP), hardware accelerators and similar circuitry. For example, binary multipliers are used in the baseband processing in wireless and wireline communication systems (e.g. multiplication is a commonly used operation in physical layer signal processing algorithms). Binary multipliers are also widely used in machine learning algorithms.

Binary multiplication may be performed by generating and summing partial product vectors. For example, in order to multiply the 4-bit binary word 1011 by the 4-bit binary word 1110, all bits of one input (e.g. 1011) are AND-ed with each of the bits of the other inputs to obtain the partial products, (e.g., 0000, 1011, 1011, 1011). The partial products are then shifted and added as follows:

| | | | | | | | | |
|---|---|---|---|---|---|---|---|---|
| | | | | 1 | 0 | 1 | 1 | binary input *A* |
| | | | | 1 | 1 | 1 | 0 | binary input B |
| | | | | 0 | 0 | 0 | 0 | |
| | | | 1 | 0 | 1 | 1 | | |
| | | 1 | 0 | 1 | 1 | | | |
| | 1 | 0 | 1 | 1 | | | | |
| 1 | 0 | 0 | 1 | 1 | 0 | 1 | 0 | output *Y*(*Y = A*B*) |

FIG. 2 is a block diagram of a half-adder circuit 20 and FIG. 3 is a block diagram of a full-adder circuit 30. Adding the partial products may be implemented using building blocks such as the adders 20 and 30.

The area and power consumption of binary multipliers (such as the multiplier 10) can be high due to factors such as the number of bit combinations and the large number of half- and full-adders that are required by many example embodiments. As discussed in detail below, at least some example embodiments result in a reduction of the number of bits that need to be added in the final sum compared with many multiplier implementations. This can lead to reduced silicon area and reduced power consumption.

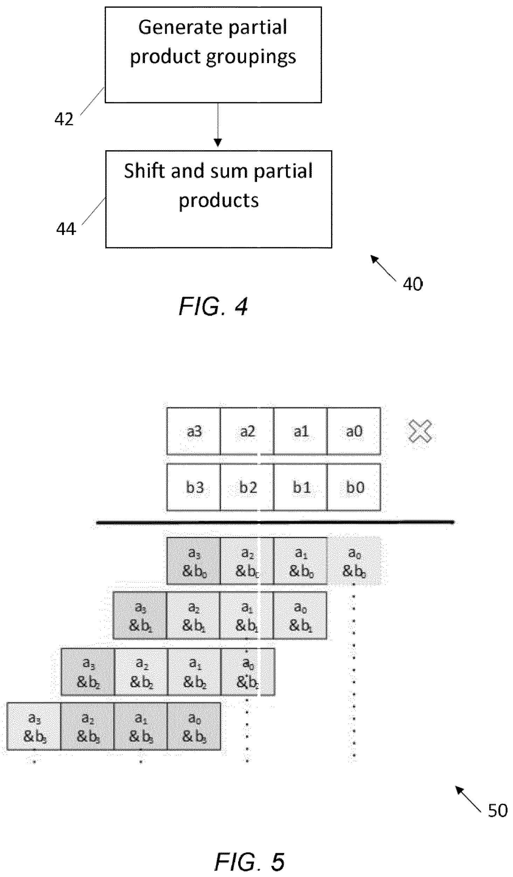

FIG. 4 is a flow chart showing an algorithm, indicated generally by the reference numeral 40, in accordance with an example embodiment.

The algorithm 40 starts at operation 42, where partial product groupings are made. Example partial product groupings are discussed further below. At operation 44, partial products generated by the partial product groupings made in the operation 42 are summed (with appropriate shifting), as discussed further below.

FIG. 5 is a block diagram, indicated generally by the reference numeral 50, showing an example multiplication of two four-bit inputs (labelled *a* and b). The input *a* comprises bits a₀ to a₃ (labelled a₃:a₀ herein). Similarly, the input b comprises bits b₀ to b₃ (labelled b₃:b₀ herein).

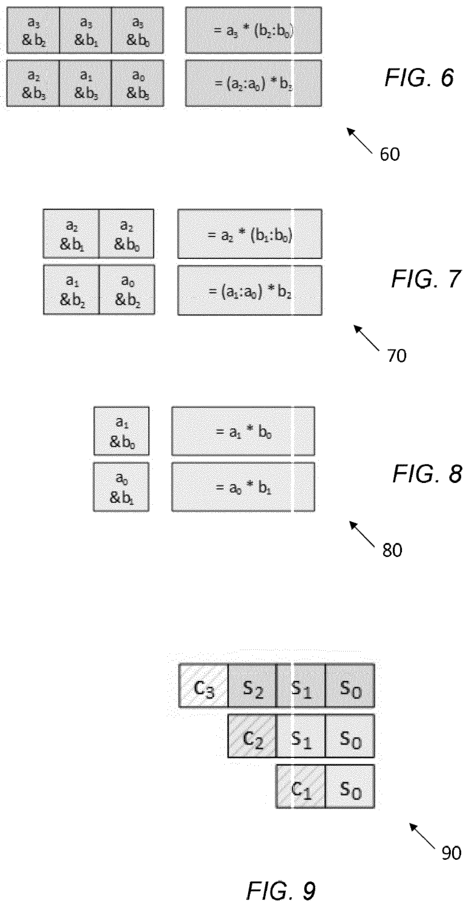

As discussed further below, the block diagram 50 shows an example implementation of the algorithm 40 in which partial product groupings are performed (as discussed below with reference to FIGS. 6 to 9) and the resulting partial products are shifted and summed to provide the multiplication Y = A * B.

FIG. 6 is a block diagram showing a first partial product grouping, indicated generally by the reference numeral 60, that forms part of a multiplication algorithm in accordance with an example embodiment. The first partial product grouping 60 is an example of one of the groupings generated in the operation 42 described above.

The first partial product grouping 60 includes part of a first diagonal of the block diagram 50 representing the outputs a₃ & b₂, a₃ & b₁, a₃ & b₀ (i.e. b₂:b₀ bitwise AND-ed with bit a₃), and part of a first horizontal of the block diagram 50 representing the outputs a₂ & b₃, a₁ & b₃, and a₀ & b₃, (i.e. a₂:a₀ bitwise AND-ed with bit b₃). Note that the output a₃ & b₃ that forms the tip of both the first diagonal and the first horizontal (referred to below as a "tip bit") is dealt with separately, as discussed in detail below.

When adding just those values of the partial product grouping 60, depending on the specific values of selector bits aᵢ and bᵢ, the result would be:
- (aᵢ₋₁:a₀)+(bᵢ₋₁:b₀) when aᵢ = 1 and bᵢ = 1,
- (aᵢ₋₁:a₀) when aᵢ = 0 and bᵢ = 1,
- (bᵢ₋₁:b₀) when aᵢ = 1 and bᵢ = 0,
- 0 when aᵢ = 0 and bᵢ = 0.

Thus, the result of the first partial product grouping 60 (wherein i=3) is:
- (a₂:a₀)+(b₂:b₀) when a₃ = 1 and b₃ = 1,
- (a₂:a₀) when a₃ = 0 and b₃ = 1,
- (b₂:b₀) when a₃ = 1 and b₃ = 0,
- 0 when a₃ = 0 and b₃ = 0.

FIG. 7 is a block diagram showing a second partial product grouping, indicated generally by the reference numeral 70, that forms part of a multiplication algorithm in accordance with an example embodiment. The second partial product grouping 70 is an example of one of the groupings generated in the operation 42 described above.

The second partial product grouping 70 includes part of a second diagonal of the block diagram 50 representing the outputs a₂ & b₁, a₂ & b₀ (i.e. b₁:b₀ bitwise AND-ed with bit a₂) and part of a second horizontal of the block diagram 50 representing the outputs a₁ & b₂, and a₀ & b₂, (i.e. a₁:a₀ bitwise AND-ed with bit b₂). Note that the output a₂ & b₂ that forms the tip of both the second diagonal and the second horizontal is dealt with separately, as discussed in detail below.

As noted above, when adding just those values of a partial product grouping, depending on the specific values of selector bits aᵢ and bᵢ, the result would be:
- (aᵢ₋₁:a₀)+(bᵢ₋₁:b₀) when aᵢ = 1 and bᵢ = 1,
- (aᵢ₋₁:a₀) when aᵢ = 0 and bᵢ = 1,
- (bᵢ₋₁:b₀) when aᵢ = 1 and bᵢ = 0,
- 0 when aᵢ = 0 and bᵢ = 0.

Thus, the result of the second partial product grouping 70 (wherein i=2) is:
- (a₁:a₀)+(b₁:b₀) when a₂ = 1 and b₂ = 1,
- (a₁:a₀) when a₂ = 0 and b₂ = 1,
- (b₁:b₀) when a₂ = 1 and b₂ = 0,
- 0 when a₂ = 0 and b₂ = 0.

FIG 8 is a block diagram showing a third partial product grouping, indicated generally by the reference numeral 80, that forms part of a multiplication algorithm in accordance with an example embodiment. The third partial product grouping 80 is an example of one of the groupings generated in the operation 42 described above.

The third partial product grouping 80 includes part of a third diagonal of the block diagram 50 representing the outputs a₁ & b₀ and part of a third horizontal of the block diagram 50 representing the outputs a₀ & b₁. Note that the output a₁ & b₁ that forms the tip of both the third diagonal and the third horizontal is dealt with separately, as discussed in detail below.

As noted above, when adding just those values of a partial product grouping, depending on the specific values of selector bits aᵢ and bᵢ, the result would be:
- (aᵢ₋₁:a₀)+(bᵢ₋₁:b₀) when aᵢ = 1 and bᵢ = 1,
- (aᵢ₋₁:a₀) when aᵢ = 0 and bᵢ = 1,
- (bᵢ₋₁:b₀) when aᵢ = 1 and bᵢ = 0,
- 0 when aᵢ = 0 and bᵢ = 0.

Thus, the result of the third partial product grouping 80 (wherein i=1) is:
- (a₀)+( b₀) when a₁ = 1 and b₁ = 1,
- (a₀) when a₁ = 0 and b₁ = 1,
- (b₀) when a₁ = 1 and b₁ = 0,
- 0 when a₁ = 0 and b₁ = 0.

A first observation that follows from the discussion above is that different number of bits from the *a* and b vectors have to be added to produce possible partial products in the different partial product groupings. In the worst case scenario, when all bits in a and b have the value of 1, there has to be hardware to generate N-1 sums of (aᵢ₋₁:a₀)+(bᵢ₋₁:b₀) for all i values between 0 and N. An example arrangement for computing these sums is discussed in detail below.

A second observation is that the first partial product grouping 60 needs to be able to add a first three-bit term (a₂:a₀) and a second three-bit term (b₂:b₀). The output of this summation will be at most 4-bits (due to the carry).

FIG. 9 is a block diagram, indicated generally by the reference numeral 90, showing steps of a multiplication algorithm in accordance with an example embodiment. Specifically, the block diagram 90 shows the outputs of the summations of the first to third partial product grouping as follows:
- A four-bit partial product (c₃, s₂, s₁, s₀) for the first partial product grouping 60;
- A three-bit partial product (c₂, s₁, s₀) for the second partial product grouping 70; and
- A two-bit partial product (c₁, s₀) for the third partial product grouping 80.

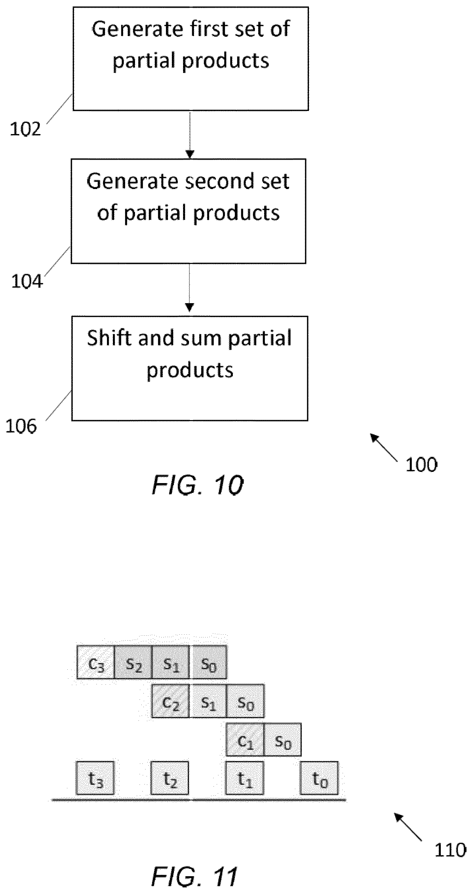

FIG. 10 is a flow chart showing an algorithm, indicated generally by the reference numeral 100, in accordance with an example embodiment.

The algorithm 100 starts at operation 102, where a first set of partial products is generated. The first set of partial products define aᵢ*(bᵢ₋₁:b₀) + bᵢ*(aᵢ₋₁:a₀) for all values of i, dependent on the values of selector bits aᵢ and bᵢ. Thus, the first to third partial product groupings 60 to 80 discussed above form the first set of partial products for that example multiplication shown and described at FIG. 5.

As discussed above, the first set of partial products is dependent on the selector bits aᵢ and bᵢ, such that the first set of partial products includes:
- The partial product (aᵢ₋₁:a₀) + (bᵢ₋₁:b₀) for all cases where aᵢ=1 and bᵢ=1;
- The partial product (aᵢ₋₁:a₀) for all cases where aᵢ=0 and bᵢ=1;
- The partial product (bᵢ₋₁:b₀) for all cases where aᵢ=1 and bᵢ=0; and
- The partial product 0 for all cases where aᵢ=0 and bᵢ=0.

At operation 104, a second set of partial products is generated. The second set of partial products define aᵢ*bᵢ for all values of i. These are the "tip bits" referred to above.

At operation 106, the partial products generated in the operations 102 and 104 are shifted in place and summed as discussed further below.

In at least some example embodiments described herein, the number of bits that need to be added in the operation 106 is less than in many multiplier implementations. This can lead to reduced silicon area and reduced power consumption.

FIG. 11 is a block diagram, indicated generally by the reference numeral 110, showing steps of a multiplication algorithm in accordance with example embodiments. Specifically, the block diagram 110 shows the outputs of the summations of the first to third partial product groupings discussed above with respect to FIG. 9 (i.e. the first set of partial products generated in the operation 102) and the second set of partial products (t₃, t₂, t₁, and t₀) generated in the operation 104. The partial products are aligned based on the respective bit significance of said partial products, thereby implementing the operation 106.

The second set of partial products generated in the operation 104 are the result of tᵢ = aᵢ AND bᵢ, where i takes values N to 0. This gives N bits for N bit wide inputs. The horizontal alignment of the second set of partial products provides a 1-bit space between each partial product. This may be implemented by making the relevant spacer bits zero. In an alternative embodiment, the second set of partial products may be added to the respective element of the first set of partial products.

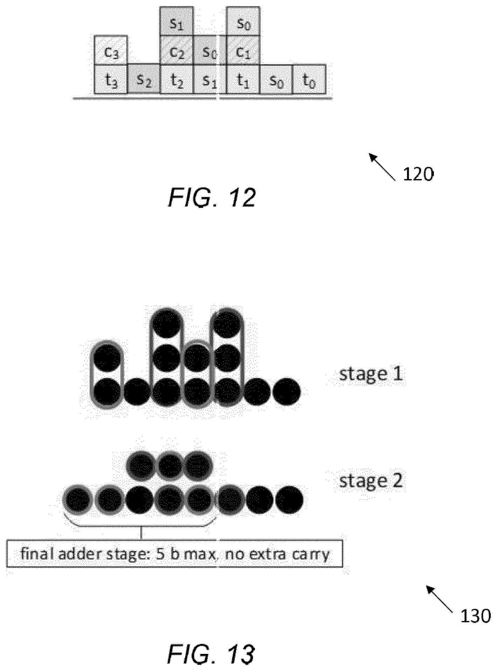

FIG. 12 is a block diagram, indicated generally by the reference numeral 120, showing steps of a multiplication algorithm in accordance with example embodiments. The block diagram 120 is identical to the block diagram 110, with the exception that terms have been collapsed vertically, whilst keeping the horizontal positions (the bit significance) the same. This gives a more intuitive picture of the bits that have to be added at each binary position into the final summation tree.

FIG. 13 is a block diagram, indicated generally by the reference numeral 130, showing steps of a multiplication algorithm in accordance with example embodiments. The block diagram 130 shows a Wallace tree approach that can be used to sum the shifted partial products described above. Thus, the first and second sets of partial products generated in the operations 102 and 104 can be shifted and then combined using a Wallace tree combination to implement the operation 106 of the algorithm 100.

In the block diagram 130, black dots are used to represent specific bits and ovals are used to represent adders (where full adders are used where there are three input bits and half adders are used where there are two inputs). In stage 2 of this Wallace tree, the adder outputs are shown, such that the full adder and half adder functionality has reduced the number of bits. Note that the dots in stage 2 without circles around them have not yet passed through an adder.

In the specific example shown in stage 2 of the block diagram 130, a final adder stage can be carried out either with a 5-bit carry propagate adder (but for this specific case could be optimized to 3 full adders and 1 half adder). For the MSB bit, that we are sure will not generate a carry at this point in the computation, we only need an OR gate. The 3 least-significant bits can be just directly passed into the final result. The result of the final adder stage is the result of the multiplication.

The Wallace tree approach for the generation of the result of the multiplication is described above by way of example only. Other methods will be apparent to those of ordinary skill in the art.

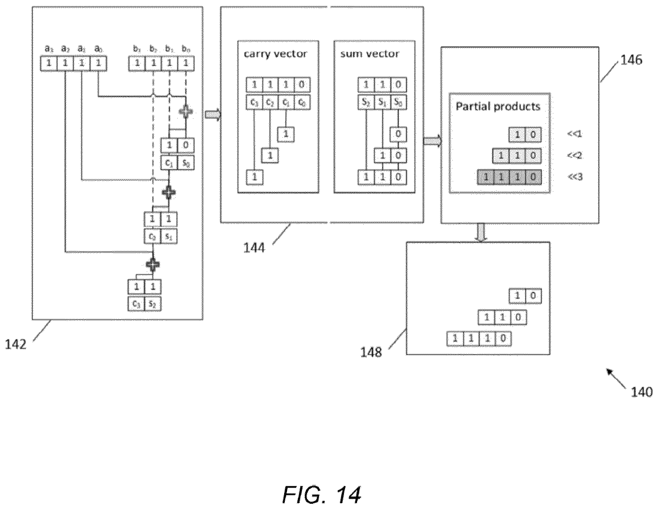

FIG. 14 is a block diagram of a system, indicated generally by the reference numeral 140, in accordance with an example embodiment. The system 140 comprises a summing module 142, a vector generation module 144, a partial product generator 146 and a partial products alignment module 148.

The system 140 can be used to generate the sum of *(aᵢ₋₁:a₀)+(bᵢ₋₁:b₀)* for any value of i, by adding one bit from each *a* and b to the left of the previous sum. As discussed further below, a sum vector and a carry vector is generated to enable generation of the partial product (aᵢ₋₁:aₒ) + (bᵢ₋₁:bₒ) for any value of i.

The summing module 142 receives the inputs *a* and b that are to be multiplied and may, for example, store those inputs in registers. In the example shown in FIG. 14, the inputs are 4-bit inputs, but this is an example only; the inputs could be of any length.

The summing module 142 sums the least significant bits of the inputs (a₀ and b₀) and generates a sum bit (s₀) and a carry bit (c₁). In the example shown, the inputs (a₀ and b₀) are both 1, such that the sum bit is 0 and the carry bit is 1.

The summing module 142 generates a second sum bit (s₁) and a second carry bit (c₂) by summing the inputs a₁ and b₁ and the carry bit c₁, generates a third sum bit (s₂) and a third carry bit (c₃) by summing the inputs a₂ and b₂ and the carry bit c₂, and (although not explicitly shown), may generate a fourth sum bit (s₃) and a fourth carry bit (c₄) by summing the inputs a₃ and b₃ and the carry bit c₃. (Note that the fourth sum bit (s₃) and the fourth carry bit (c₄) may be generated, but they are not needed or used in the example embodiments described above. As shown in FIGS. 5 to 8, there is no need for a sum [(a₃:a₀) + (b₃:b₀)] that would require using s₃ and c₄.)

Each of the sum and carry bits generated by the summing module 142 may be stored in registers of the vector generation module 144. However, in some example implementations, such storage is not necessary as the results are generated on-the-fly.

The partial product generator 146 can extract and correctly construct the sum and carry bits required to create the candidate partial products required for generating the sum *(aᵢ₋₁:a₀)+(bᵢ₋₁:b₀)* for any value of i. Thus, the candidate partial products are based on two vectors (one composed of the sum bits and the other by the carry bits). These bits are combined into the candidate partial products, where for a partial product i, all bits from i to *0* are from the sum, and the i+1 bit is from the carry. The particular products may be generated by the partial product generator 146 using the methods described above, for example with reference to FIGS. 6 to 8.

Finally, the partial products alignment module 148 is used to place the partial products in the correct alignment positions so that the partial products can be added to give the relevant multiplier output.

In a classical carry propagate adder, one uses one half adder for left most bits and full adders afterwards for higher index bits. In the example system 140, the result of the sum (aᵢ₋₁:a₀)+(bᵢ₋₁:b₀) may be used to compute also wider sums like (aᵢ:a₀)+(bᵢ:b₀) and thereafter, i.e., adding bits to the left of an existing sum. The carry generated from these adders are then propagated to the next full adder to be added to the respective bits of *a* and b. Classically, after being used (propagated) the carry bit is dropped, but in the system 140, each sum bit and each carry bit is saved for later reuse.

Of course, the system 140 is provided by way of example. Alternative embodiments are possible.

In the example embodiments described above, the adder is a symmetric adder (in which the inputs *A* and *B* have the same number of bits). However, the principles described herein can be applied to asymmetric adders (where the inputs have different numbers of bits). When A and B have different number of bits, the two inputs to the partial product generator 146 need to be aligned to left (most significant bit side). If input A has M bits, and input B has N bits, where M>N, then one must be aligning the inputs so the sum becomes k_sum = A + (B<<(M-N)). This alignment is separate from the one schematically represented in FIG. 11 and also happens at an earlier stage. In examples, one can use fewer multiplexors when constructing the partial products for the right-most position bits, where only one of the inputs has active bits. At the partial product selection, like in FIG. 5, a MUX-4 may be used for the most significant (M-N) bits, where the *A* and (B<<(M-N)) values overlap, but for the LSB-N bits (where only value A is having nonzero bits) one can use the AND gates (or a MUX-2) that would choose whether to have the bits of A (the sum would have the value of a for those bits) or 0's. Thus, scaling is not linear with the sum of M+N bits.

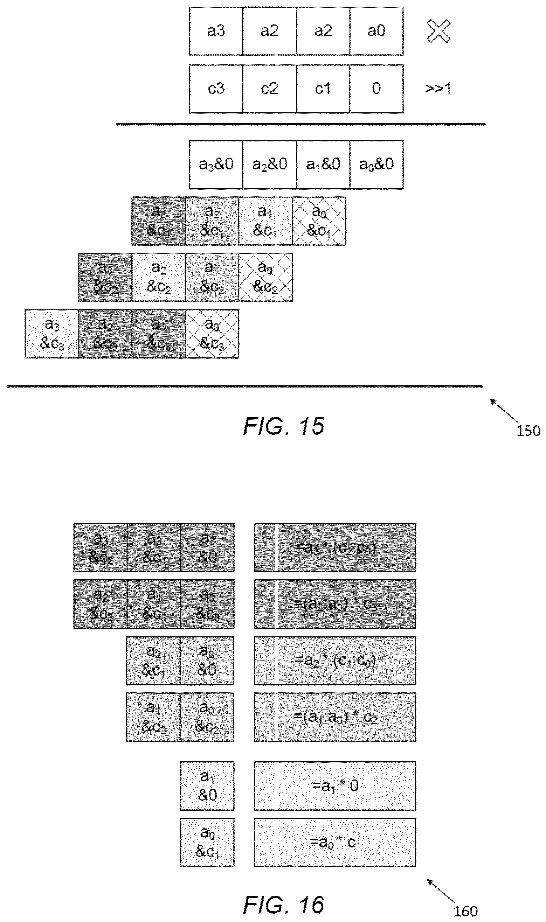

In some example embodiments, in the asymmetric case, where input A has M bits and input B has N bits we have the scenario shown in FIG. 5, in which one or more bits of either the input A or the input B is zero. We can rewrite this example, with an equivalent by defining C = B<<(M-N), where A*B = A*(B<<(M-N))>>(M-N) = A*C>>(M-N), as shown in FIG. 15, which shows a block diagram, indicated generally by the reference numeral 150, showing a multiplication of two inputs (A and C).

In this case, the adder preparing the candidate partial products needs to operate on (a_{M-1}:a_{M-N}) + (C_{M-1}:c_{M-N}), or the equivalent (a_{M-1}:a_{M-N}) + (b_{N-1}:b₀). The least significant bits from A can be either treated as the tip bits (only using AND operation and added in the final stage) or just concatenated on the right side to the output of the first adder, as s_{M-N-1}:s₀ where the corresponding carry bits are 0, as shown in FIG. 16, which shows a block diagram showing partial product groupings that form part of a multiplication algorithm in accordance with an example embodiment.

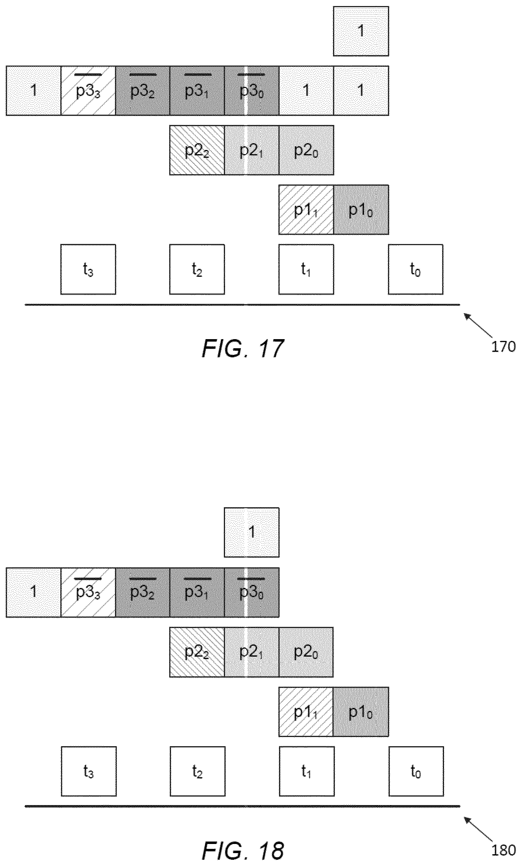

In the example embodiments described above, the inputs A and B as well as the output Y (see FIG. 1) are unsinged numbers. The same approach can also be used when the 2's complement numeric representation is used for the inputs A and B and output Y. The required modifications are of low impact, as indicated in FIGS. 17 and 18, which are block diagrams showing steps of a multiplication algorithm in accordance with example embodiments.

With p1, p2 and p3 we indicate the partial products selected at the steps shown in FIGS. 6, 7 and 8 described above, respectively. The partial product of highest index/left most (p3) has to be subtracted instead of added to the final sum. In this example, the final sum becomes product = T+Q1+Q2-Q3, where T is the vector generated with the tip bits, Q1, Q2 and Q3 are the correctly aligned partial products p1, p2, p3. Another implementation is using another particularity of the 2's complement numeric format, we can replace, -Q3 by bitwise negated Q3 and a bit '1' at index 0. Taking into account the known '1' bits that we just introduced, a third and more efficient approach is to only negate the bits of p3, and place two bits of '1': one in front of p3 (index 2*N-1) and the other at index N-1, as shown in FIG. 18. The partial products such obtained, can be added following the example above for the unsigned multiplier. Thus, for this last example the only variations are a series of N binary NOT gates after the partial product selection and before the alignment step, and two additional bits of value '1' correctly aligned. So, the changes required for a signed compared to an unsigned multiplier are minimal, allowing also for a large reuse of the hardware between the two variants. This gain in efficiency may improve the more times over different multipliers (for the signed, unsigned, or mixed cases) are defined in a hardware implementation. A hardware implementation may define, many times over, different multipliers for the signed, unsigned, or mixed cases.

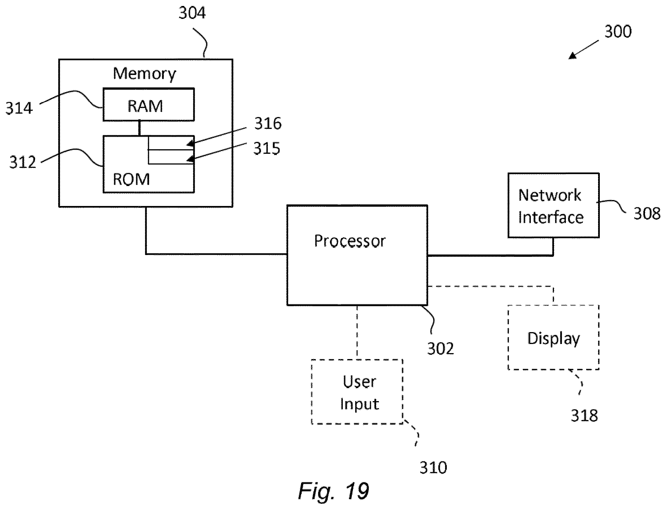

For completeness, FIG. 19 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 40 and 100 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

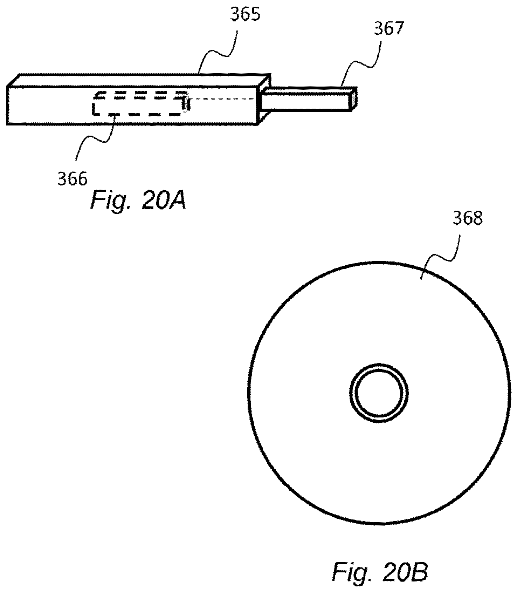

FIGS. 20A and 20B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 4 and 10 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising means for performing:
receiving a first input A and a second input B, wherein the first input comprises bits aᵢ:a₀ and the second input comprises bits bᵢ:b₀;
generating (102) a first set of partial products that define aᵢ*(bᵢ₋₁:b₀) + bᵢ*(aᵢ₋₁:a₀) for all values of i, dependent on the values of selector bits aᵢ and bᵢ;
generating (104) a second set of partial products that define aᵢbᵢ for all values of i; and
shifting and summing (106) the first and second sets of partial products to provide the multiplication Y=A*B, wherein said shifting of said first and second sets of partial products aligns said partial products based on the respective bit significance of said partial products.

2. An apparatus as claimed in claim 1, wherein the first and second inputs are both N-bit wide inputs, such that said values of i range from 0 to N-1.

3. An apparatus as claimed in claim 1 or claim 2, wherein the means for performing generating the first set of partial products provides the partial product (aᵢ₋₁:a₀) + (bᵢ₋₁:b₀) for all cases where aᵢ=1 and bᵢ=1.

4. An apparatus as claimed in any one of claims 1 to 3, further comprising means for performing:
generating a sum vector and a carry vector to enable generation of the partial product (aᵢ₋₁:a₀) + (bᵢ₋₁:b₀) for any value of i.

5. An apparatus as claimed in any one of the preceding claims, wherein the means for performing generating the first set of partial products provides the partial product (aᵢ₋₁:a₀) for all cases where aᵢ=0 and bᵢ=1.

6. An apparatus as claimed in any one of the preceding claims, wherein the means for performing generating the first set of partial products provides the partial product (bᵢ₋₁:b₀) for all cases where aᵢ=1 and bᵢ=0.

7. An apparatus as claimed in any one of the preceding claims, wherein the means for performing generating the first set of partial products provides the partial product o for all cases where aᵢ=0 and bᵢ=0.

8. An apparatus as claimed in any one of the preceding claims, wherein said summing the first and second sets of partial products comprises a combination of the shifted first and second sets of partial products.

9. An apparatus as claimed in any one of the preceding claims, wherein said means comprise:
at least one processor; and
at least one memory including computer program code, the at least one memory and the computer program code configured to, with the at least one processor, cause the performance of the apparatus.

10. A method, the method being computer-implemented, comprising:
receiving a first input A and a second input B, wherein the first input comprises bits aᵢ:a₀ and the second input comprises bits bᵢ:b₀;
generating (102) a first set of partial products that define aᵢ*(bᵢ₋₁:bₒ) + bᵢ*(aᵢ₋₁:aₒ) for all values of i, dependent on the values of selector bits aᵢ and bᵢ;
generating (104) a second set of partial products that define aᵢbᵢ for all values of i; and
shifting and summing (106) the first and second sets of partial products to provide the multiplication Y=A*B, wherein said shifting of said first and second sets of partial products aligns said partial products based on the respective bit significance of said partial products.

11. A method as claimed in claim 10, wherein generating the first set of partial products comprising one or more of:
providing the partial product (aᵢ₋₁:aₒ) + (bᵢ₋₁:bₒ) for all cases where aᵢ=1 and bᵢ=1;
providing the partial product (aᵢ₋₁:a₀) for all cases where aᵢ=o and bᵢ=1;
providing the partial product (bᵢ₋₁:bₒ) for all cases where aᵢ=1 and bᵢ=o; and
providing the partial product o for all cases where aᵢ=O and bᵢ=0.

12. A method as claimed in claim 10 or claim 11, further comprising:
generating a sum vector and a carry vector to enable generation of the partial product (aᵢ₋₁:aₒ) + (bᵢ₋₁:bₒ) for any value of i.

13. A computer program comprising instructions for causing an apparatus to perform at least the following:
receiving a first input A and a second input B, wherein the first input comprises bits aᵢ:a₀ and the second input comprises bits bᵢ:b₀;
generating a first set of partial products that define aᵢ*(bᵢ₋₁:b₀) + bᵢ*(aᵢ₋₁:a₀) for all values of i, dependent on the values of selector bits aᵢ and bᵢ;
generating a second set of partial products that define aᵢbᵢ for all values of i; and
shifting and summing the first and second sets of partial products to provide the multiplication Y=A*B, wherein said shifting of said first and second sets of partial products aligns said partial products based on the respective bit significance of said partial products.

14. A computer program as claimed in claim 13, further comprising instructions for causing an apparatus to perform at least one of the following:
providing the partial product (aᵢ₋₁:a₀) + (bᵢ₋₁:b₀) for all cases where aᵢ=1 and bᵢ=1;
providing the partial product (aᵢ₋₁:a₀) for all cases where aᵢ=0 and bᵢ=1;
providing the partial product (bᵢ₋₁:b₀) for all cases where aᵢ=1 and bᵢ=0; and
providing the partial product o for all cases where aᵢ=0 and bᵢ=0.

15. A computer program as claimed in claim 13 or claim 14, further comprising instructions for causing an apparatus to perform at least the following:
generating a sum vector and a carry vector to enable generation of the partial product (aᵢ₋₁:a₀) + (bᵢ₋₁:b₀) for any value of i.

## Patentansprüche

1. Einrichtung, die Mittel zum Durchführen von Folgendem umfasst:
Empfangen einer ersten Eingabe A und einer zweiten Eingabe B, wobei die erste Eingabe Bits aᵢ:a₀ umfasst und die zweite Eingabe Bits bᵢ:b₀ umfasst;
Erzeugen (102) eines ersten Satzes von teilweisen Produkten, die aᵢ*(bᵢ₋₁:b₀) + bᵢ*(aᵢ₋₁:a₀) für alle Werte von i, in Abhängigkeit von den Werten von Auswählerbits aᵢ und bᵢ definieren;
Erzeugen (104) eines zweiten Satzes von teilweisen Produkten, die aᵢbᵢ für alle Werte von i definieren; und
Verschieben und Summieren (106) des ersten und des zweiten Satzes von teilweisen Produkten, um die Multiplikation Y=A*B bereitzustellen, wobei das Verschieben des ersten und des zweiten Satzes von teilweisen Produkten die teilweisen Produkte auf Basis der jeweiligen Bitsignifikanz der teilweisen Produkte ausrichtet.

2. Einrichtung nach Anspruch 1, wobei die erste und die zweite Eingabe N-Bit-breite Eingaben sind, derart, dass die Werte von i von 0 bis N-1 reichen.

3. Einrichtung nach Anspruch 1 oder Anspruch 2, wobei die Mittel zum Durchführen des Erzeugens des ersten Satzes von teilweisen Produkten das teilweise Produkt (aᵢ₋₁:a₀) + (bᵢ₋₁:b₀) für alle Fälle bereitstellt, in denen aᵢ=1 und bᵢ=1.

4. Einrichtung nach einem der Ansprüche 1 bis 3, die ferner Mittel zum Durchführen von Folgendem umfasst:
Erzeugen eines Summenvektors und eines Übertragsvektors, um eine Erzeugung des teilweisen Produkts (aᵢ₋₁:a₀) + (bᵢ₋₁:b₀) für jeden Wert von i zu ermöglichen.

5. Einrichtung nach einem der vorhergehenden Ansprüche, wobei die Mittel zum Durchführen des Erzeugens des ersten Satzes von teilweisen Produkten das teilweise Produkt (aᵢ₋₁:a₀) für alle Fälle bereitstellen, in denen aᵢ=0 und bᵢ=1.

6. Einrichtung nach einem der vorhergehenden Ansprüche, wobei die Mittel zum Durchführen des Erzeugens des ersten Satzes von teilweisen Produkten das teilweise Produkt (bᵢ₋₁:b₀) für alle Fälle bereitstellen, in denen aᵢ=1 und bᵢ=0.

7. Einrichtung nach einem der vorhergehenden Ansprüche, wobei die Mittel zum Durchführen des Erzeugens des ersten Satzes von teilweisen Produkten das teilweise Produkt 0 für alle Fälle bereitstellen, in denen aᵢ=0 und bᵢ=0.

8. Einrichtung nach einem der vorhergehenden Ansprüche, wobei das Summieren des ersten und des zweiten Satzes von teilweisen Produkten eine Kombination des ersten und des zweiten verschobenen Satzes des teilweisen Produkts umfasst.

9. Einrichtung nach einem der vorhergehenden Ansprüche, wobei die Mittel Folgendes umfassen:
mindestens einen Prozessor; und
mindestens einen Speicher, der Computerprogrammcode beinhaltet, wobei der mindestens eine Speicher und der Computerprogrammcode dazu ausgelegt sind, mit dem mindestens einen Prozessor die Durchführung der Einrichtung zu veranlassen.

10. Verfahren, wobei das Verfahren computerimplementiert ist und Folgendes umfasst:
Empfangen einer ersten Eingabe A und einer zweiten Eingabe B, wobei die erste Eingabe Bits aᵢ:a₀ umfasst und die zweite Eingabe Bits bᵢ:b₀ umfasst;
Erzeugen (102) eines ersten Satzes von teilweisen Produkten, die aᵢ*(bᵢ₋₁:b₀) + bᵢ*(aᵢ₋₁:a₀) für alle Werte von i, in Abhängigkeit von den Werten von Auswählerbits aᵢ und bᵢ definieren;
Erzeugen (104) eines zweiten Satzes von teilweisen Produkten, die aᵢbᵢ für alle Werte von i definieren; und
Verschieben und Summieren (106) des ersten und des zweiten Satzes von teilweisen Produkten, um die Multiplikation Y=A*B bereitzustellen, wobei das Verschieben des ersten und des zweiten Satzes von teilweisen Produkten die teilweisen Produkte auf Basis der jeweiligen Bitsignifikanz der teilweisen Produkte ausrichtet.

11. Verfahren nach Anspruch 10, wobei das Erzeugen des ersten Satzes von teilweisen Produkten eines oder mehreres von Folgendem umfasst:
Bereitstellen des teilweisen Produkts (aᵢ₋₁:a₀) + (bᵢ₋₁:b₀) für alle Fälle, in denen aᵢ=1 und bᵢ=1;
Bereitstellen des teilweisen Produkts (aᵢ₋₁:a₀) für alle Fälle, in denen aᵢ=0 und bᵢ=1;
Bereitstellen des teilweisen Produkts (bᵢ₋₁:b₀) für alle Fälle, in denen aᵢ=1 und bᵢ=0; und
Bereitstellen des teilweisen Produkts 0 für alle Fälle, in denen aᵢ=0 und bᵢ=0.

12. Verfahren nach Anspruch 10 oder Anspruch 11, das ferner Folgendes umfasst:
Erzeugen eines Summenvektors und eines Übertragsvektors, um eine Erzeugung des teilweisen Produkts (aᵢ₋₁:a₀) + (bᵢ₋₁:b₀) für jeden Wert von i zu ermöglichen.

13. Computerprogramm, das Anweisungen zum Veranlassen einer Einrichtung, mindestens Folgendes durchzuführen, umfasst:
Empfangen einer ersten Eingabe A und einer zweiten Eingabe B, wobei die erste Eingabe Bits aᵢ:a₀ umfasst und die zweite Eingabe Bits bᵢ:b₀ umfasst;
Erzeugen eines ersten Satzes von teilweisen Produkten, die aᵢ* (bᵢ₋₁:b₀) + bᵢ*(aᵢ₋₁:a₀) für alle Werte von i, in Abhängigkeit von den Werten von Auswählerbits aᵢ und bᵢ definieren;
Erzeugen eines zweiten Satzes von teilweisen Produkten, die aᵢbᵢ für alle Werte von i definieren; und
Verschieben und Summieren des ersten und des zweiten Satzes von teilweisen Produkten, um die Multiplikation Y=A*B bereitzustellen, wobei das Verschieben des ersten und des zweiten Satzes von teilweisen Produkten die teilweisen Produkte auf Basis der jeweiligen Bitsignifikanz der teilweisen Produkte ausrichtet.

14. Computerprogramm nach Anspruch 13, das ferner Anweisungen zum Veranlassen einer Einrichtung, mindestens eines von Folgendem durchzuführen, umfasst:
Bereitstellen des teilweisen Produkts (aᵢ₋₁:a₀) + (bᵢ₋₁:b₀) für alle Fälle, in denen aᵢ=1 und bᵢ=1;
Bereitstellen des teilweisen Produkts (aᵢ₋₁:a₀) für alle Fälle, in denen aᵢ=0 und bᵢ=1;
Bereitstellen des teilweisen Produkts (bᵢ₋₁:b₀) für alle Fälle, in denen aᵢ=1 und bᵢ=0; und
Bereitstellen des teilweisen Produkts 0 für alle Fälle, in denen aᵢ=0 und bᵢ=0.

15. Computerprogramm nach Anspruch 13 oder Anspruch 14, das ferner Anweisungen zum Veranlassen einer Einrichtung, mindestens Folgendes durchzuführen, umfasst:
Erzeugen eines Summenvektors und eines Übertragsvektors, um eine Erzeugung des teilweisen Produkts (aᵢ₋₁:a₀) + (bᵢ₋₁:b₀) für jeden Wert von i zu ermöglichen.

## Revendications

1. Appareil comprenant des moyens pour réaliser les opérations suivantes :
recevoir une première entrée A et une deuxième entrée B, dans lequel la première entrée comprend des bits aᵢ:a₀ et la deuxième entrée comprend des bits bᵢ:b₀ ;
générer (102) un premier ensemble de produits partiels qui définissent aᵢ* (bᵢ₋₁:b₀) + bᵢ*(aᵢ₋₁:a₀) pour toutes les valeurs de i en fonction des valeurs de bits de sélection aᵢ et bᵢ ;
générer (104) un deuxième ensemble de produits partiels qui définissent aᵢbᵢ pour toutes les valeurs de i ; et
décaler et additionner (106) les premier et deuxième ensembles de produits partiels pour fournir la multiplication Y = A*B, dans lequel ledit décalage desdits premier et deuxième ensembles de produits partiels aligne lesdits produits partiels sur la base de la signification binaire respective desdits produits partiels.

2. Appareil selon la revendication 1, dans lequel les première et deuxième entrées sont toutes deux des entrées de N bits, de sorte que lesdites valeurs de i vont de 0 à N-1.

3. Appareil selon la revendication 1 ou la revendication 2, dans lequel les moyens pour réaliser la génération du premier ensemble de produits partiels fournissent le produit partiel (aᵢ-₁:a₀) + (bᵢ₋₁:b₀) pour tous les cas où aᵢ = 1 et bᵢ = 1.

4. Appareil selon l'une des revendications 1 à 3, comprenant en outre des moyens pour réaliser l'opération suivante :
générer un vecteur somme et un vecteur report pour permettre la génération du produit partiel (aᵢ₋₁:a₀) + (bᵢ₋₁:b₀) pour toute valeur de i.

5. Appareil selon l'une des revendications précédentes, dans lequel les moyens pour réaliser la génération du premier ensemble de produits partiels fournissent le produit partiel (aᵢ₋₁:a₀) pour tous les cas où aᵢ = 0 et bᵢ = 1.

6. Appareil selon l'une des revendications précédentes, dans lequel les moyens pour réaliser la génération du premier ensemble de produits partiels fournissent le produit partiel (bᵢ-₁:b₀) pour tous les cas où aᵢ = 1 et bᵢ = 0.

7. Appareil selon l'une des revendications précédentes, dans lequel les moyens pour réaliser la génération du premier ensemble de produits partiels fournissent le produit partiel 0 pour tous les cas où aᵢ = 0 et bᵢ = 0.

8. Appareil selon l'une des revendications précédentes, dans lequel ladite addition des premier et deuxième ensembles de produits partiels comprend une combinaison des premier et deuxième ensembles de produits partiels décalés.

9. Appareil selon l'une des revendications précédentes, dans lequel lesdits moyens comprennent :
au moins un processeur ; et
au moins une mémoire comportant un code de programme informatique, l'au moins une mémoire et le code de programme informatique étant configurés pour, avec l'au moins un processeur, provoquer le fonctionnement de l'appareil.

10. Procédé le procédé mis en œuvre par ordinateur, comprenant les étapes suivantes :
recevoir une première entrée A et une deuxième entrée B, dans lequel la première entrée comprend des bits aᵢ:a₀ et la deuxième entrée comprend des bits bᵢ:b₀ ;
générer (102) un premier ensemble de produits partiels qui définissent aᵢ* (bᵢ₋₁:b₀) + bᵢ*(aᵢ₋₁:a₀) pour toutes les valeurs de i en fonction des valeurs de bits de sélection aᵢ et bᵢ ;
générer (104) un deuxième ensemble de produits partiels qui définissent aᵢbᵢ pour toutes les valeurs de i ; et
décaler et additionner (106) les premier et deuxième ensembles de produits partiels pour fournir la multiplication Y = A*B, dans lequel ledit décalage desdits premier et deuxième ensembles de produits partiels aligne lesdits produits partiels sur la base de la signification binaire respective desdits produits partiels.

11. Procédé selon la revendication 10, dans lequel la génération du premier ensemble de produits partiels comprend une ou plusieurs des opérations suivantes :
fournir le produit partiel (aᵢ₋₁:a₀) + (bᵢ₋₁:b₀) pour tous les cas où aᵢ = 1 et bᵢ = 1 ;
fournir le produit partiel (aᵢ₋₁:a₀) pour tous les cas où aᵢ = 0 et bᵢ = 1 ;
fournir le produit partiel (bᵢ₋₁:b₀) pour tous les cas où aᵢ = 1 et bᵢ = 0 ; et
fournir le produit partiel 0 pour tous les cas où aᵢ = 0 et bᵢ = 0.

12. Procédé selon la revendication 10 ou la revendication 11, comprenant en outre :
générer un vecteur somme et un vecteur report pour permettre la génération du produit partiel (aᵢ₋₁:a₀) + (bᵢ₋₁:b₀) pour toute valeur de i.

13. Procédé informatique comprenant des instructions pour amener un appareil à réaliser au moins les opérations suivantes :
recevoir une première entrée A et une deuxième entrée B, dans lequel la première entrée comprend des bits aᵢ:a₀ et la deuxième entrée comprend des bits bᵢ:b₀ ;
générer un premier ensemble de produits partiels qui définissent aᵢ* (bᵢ₋₁:b₀) + bᵢ*(aᵢ₋₁:a₀) pour toutes les valeurs de i en fonction des valeurs de bits de sélection aᵢ et bᵢ ;
générer un deuxième ensemble de produits partiels qui définissent aᵢbᵢ pour toutes les valeurs de i ; et
décaler et additionner des premier et deuxième ensembles de produits partiels pour fournir la multiplication Y = A*B, dans lequel ledit décalage desdits premier et deuxième ensembles de produits partiels aligne lesdits produits partiels sur la base de la signification binaire respective desdits produits partiels.

14. Procédé informatique selon la revendication 13, comprenant en outre des instructions pour amener un appareil à réaliser au moins l'une des opérations suivantes :
fournir le produit partiel (aᵢ₋₁:a₀) + (bᵢ₋₁:b₀) pour tous les cas où aᵢ = 1 et bᵢ = 1 ;
fournir le produit partiel (aᵢ₋₁:a₀) pour tous les cas où aᵢ = 0 et bᵢ = 1 ;
fournir le produit partiel (bᵢ₋₁:b₀) pour tous les cas où aᵢ = 1 et bᵢ = 0 ; et
fournir le produit partiel 0 pour tous les cas où aᵢ = 0 et bᵢ = 0.

15. Programme informatique selon la revendication 13 ou la revendication 14, comprenant en outre des instructions pour amener un appareil à réaliser au moins l'opération suivante :
générer un vecteur somme et un vecteur report pour permettre la génération du produit partiel (aᵢ₋₁:a₀) + (bᵢ₋₁:b₀) pour toute valeur de i.
